# EUROPÄISCHE PATENTSCHRIFT

(11) **EP 2 661 947 B1**
(45) Veröffentlichungstag und Bekanntmachung des Hinweises auf die Patenterteilung: **30.03.2016**
(21) Anmeldenummer: 13163662.3
(22) Anmeldetag: 15.04.2013
(51) Int. Cl.: F16C 33/78, A01B 71/04

(54) **Lageranordnung eines landwirtschaftlichen Geräts**
Bearing assembly for an agricultural device
Agencement de roulement d'un appareil agricole

(30) Priorität: 10.05.2012 DE 102012207848
(43) Veröffentlichungstag der Anmeldung: 13.11.2013
(73) Patentinhaber: Schaeffler Technologies AG & Co. KG, 91074 Herzogenaurach (DE)
(72) Erfinder: Krüger, Jens, 90427 Nürnberg (DE); Häpp, Alexander, 97461 Hofheim (DE); Spohn, Markus, 91097 Oberreichenbach (DE); Heilmann, Thomas, 91099 Poxdorf (DE); Hölzel, Christian, 91320 Ebermannstadt (DE)

(56) Entgegenhaltungen:
- EP-A1- 1 403 539
- WO-A1-2007/093534
- WO-A1-2010/124731
- WO-A2-2007/105185
- DE-A1- 4 431 277
- DE-A1- 19 600 125
- US-A- 5 347 801
- US-A1- 2004 080 113

## Beschreibung

### Gebiet der Erfindung

Die Erfindung betrifft eine Lageranordnung eines landwirtschaftlichen Geräts zur drehbaren Lagerung eines scheibenförmigen Werkzeuges, die Lageranordnung umfassend ein Wälzlager mit einer Vielzahl von um eine Lagerachse in einem Lagerraum abwälzender Wälzkörper, wobei der Lagerraum gegenüber der Umgebung an einem axialen Ende der Lageranordnung durch zumindest eine berührende Dichtung und eine berührungslose Dichtung abgedichtet ist, wobei die berührungslose Dichtung durch einen Spalt zwischen einem Dichtungskörper und einem relativ zu dem Dichtungskörper drehbaren Werkzeugträger gebildet wird, indem der Dichtungskörper eine Außenmantelfläche des Werkzeugträgers an einem, dem axialen Ende der Lageranordnung zugewandten Ende axial zumindest teilweise hintergreift.

### Hintergrund der Erfindung

Ein solches landwirtschaftliches Gerät kann beispielsweise eine Scheibenegge, eine Sähmaschine oder ein Pflug sein.

Die drehbare Lagerung des Werkzeuges gegenüber einem Gestell (z.B. Arm oder Hebel) des landwirtschafltichen Geräts ist aufgrund der rauen Einsatzbedingungen anspruchsvoll. So liegt ein besonderes Augenmerk auf der Abdichtung des Lagerraumes gegenüber der Umgebung, um das Eindringen von Schmutz (Schlamm, Steine etc.) bzw. Feuchtigkeit zu verhindern.

Lageranordnungen landwirtschaftlicher Geräte sind aus der WO2007/105185A2, der WO2010/124731A1 oder der DE102006007580A1 bekannt.

Zwar weisen die bekannten Lageranordnungen teilweise bereits mehrstufige Dichtungen, insbesondere Kombinationen von berührenden und berührungslosen Dichtungen, auf. Es zeigte sich jedoch in der Praxis, dass die bislang bekannten Dichtungen weiterhin ein die Lebensdauer der Lageranordnung stark limitierender Faktor sind.

Eine Lageranordnung mit den Merkmalen gemäß Oberbegriff des Patentanspruchs 1 ist in der WO-A-2007093534 offenbart.

DE19600125A1 zeigt eine abgedichtete Lageranordnung, bei der ein Wälzlageraußenring mit einer Nut versehen ist, um das Ableiten von Spritzwasser zu ermöglichen.

### Aufgabe der Erfindung

Der vorliegenden Erfindung liegt die Aufgabe zugrunde, eine gattungsgemäße Lageranordnung bereitzustellen, die eine verbesserte Abdichtung gegenüber der Umgebung aufweist und die einfach und kostengünstig hergestellt werden kann.

### Beschreibung der Erfindung

Diese Aufgabe wird für die Lageranordnung eines landwirtschaftlichen Geräts zur drehbaren Lagerung eines scheibenförmigen Werkzeuges, die Lageranordnung umfassend ein Wälzlager mit einer Vielzahl von um eine Lagerachse in einem Lagerraum abwälzender Wälzkörper, wobei der Lagerraum gegenüber der Umgebung an einem axialen Ende der Lageranordnung durch zumindest eine berührende Dichtung und eine berührungslose Dichtung abgedichtet ist, wobei die berührungslose Dichtung durch einen Spalt zwischen einem Dichtungskörper und einem relativ zu dem Dichtungskörper drehbaren Werkzeugträger gebildet wird, indem der Dichtungskörper eine Außenmantelfläche des Werkzeugträgers an einem dem axialen Ende der Lageranordnung zugewandten Ende axial zumindest teilweise hintergreift, dadurch gelöst, dass axial neben dem Dichtungskörper in Richtung einer axialen Mitte der Lageranordnung eine Staunut in dem Werkzeugträger axial außermittig vorgesehen ist, und ein axial zur Mitte der Lageranordnung gerichteter Rand des Dichtungskörpers angeschrägt ist.

Der Dichtungskörper kann durch ein Blechteil (geringe Wandstärke gegenüber sonstigen Erstreckungen) gebildet werden oder aber auch durch ein Kunststoffteil. Der Werkzeugträger weist typsicherweise einen flanschartigen und radial bezüglich der Lagerachse nach außen gerichteten Kragen auf, an welchem das Werkzeug angebracht werden kann. Sofern das scheibenförmige Werkzeug die Lageranordnung komplett an einem axialen Ende der Lageranordnung abdeckt, sind an diesem axialen Ende keine besonderen Ansprüche an die Abdichtung zu stellen. Auf zumindest einem axialen Ende der Lageranordnung hingegen ist eine Abdichtung des Lagerraumes gegenüber der Umgebung erforderlich. Erfindungsgemäß sind zumindest eine berührende Dichtung (z.B. Radialwellendichtung) und eine berührungslose Dichtung (z.B. Spaltdichtung) vorhanden. Diese beiden Dichtungen an dem axialen Ende sind strömungstechnisch in Reihe geschaltet, d.h. sie liegen ausgehend von dem Lagerraum in Richtung Umgebung gesehen hintereinander. Vorzugsweise ist die berührende Dichtung näher in Richtung des Lagerraumes gelegt. Insbesondere kann es sich bei der berührenden Dichtung um eine in das Wälzlager (zwischen Außenring und Innenring des Wälzlagers) integrierte Dichtung handeln. Möglich ist auch zusätzlich weitere strömungstechnisch in Reihe geschaltete Dichtungen vorzusehen: z.B. kann eine weitere berührende Dichtung zwischen die berührungslose und die berührende Dichtung gesetzt werden.

Gemäß der Erfindung ist eine gattungsgemäße Lageranordnung dadurch gekennzeichnet, dass axial neben dem Dichtungskörper in Richtung einer axialen Mitte der Lageranordnung eine Staunut in dem Werkzeugträger axial außermittig vorgesehen ist und ein axial zur Mitte der Lageranordnung gerichteter Rand des Dichtungskörpers angeschrägt ist.

Der Dichtungskörper kann durch ein topfförmiges Element, vorzugsweise mit einer Zentralbohrung zur Aufnahme eines Lagerzapfens, gebildet werden. In diesem Fall weist der Dichtungskörper einen radial verlaufenden Abschnitt und einen axial verlaufenden Abschnitt auf; der axial verlaufende Abschnitt hintergreift den Werkzeugträger axial zumindest teilweise und bildet mit diesem einen axial verlaufenden (Ring)Spalt.

Die Staunut hat die Funktion, Fremdkörper, die radial auf die Lageranordnung einwirken, aufzunehmen und dadurch zu vermeiden, dass diese Fremdkörper direkt auf ein Ende des (Ring)Spaltes einwirken können. Die Staunut ist vorzugsweise auf einer Außenfläche (z.B. Außenmantelfläche) des Werkzeugträgers angeordnet und läuft umfänglich komplett um den Werkzeugträger um.

Die Staunut befindet sich axial außermittig in dem Werkzeugträger, vorzugsweise axial außermittig auf einer Außenmantelfläche des Werkzeugträgers. Möglich ist, dass die Staunut axial direkt an den Dichtungskörper anschließt. Das heißt, der Dichtungskörper erstreckt sich axial bis zu einem Rand der Staunut. Bei dem Rand handelt es sich dabei um jenen Rand der Staunut, der axial am weitesten von der axialen Mitte der Lageranordnung entfernt liegt.

Sofern der Werkzeugträger an dem, dem axialen Ende der Lageranordnung zugewandten Ende einen Absatz auf seiner Außenmantelfläche aufweist, hintergreift der Dichtungskörper den Werkzeugträger vorzugsweise axial innerhalb dieses Absatzes und die Staunut liegt vorzugsweise axial innerhalb des Absatzes.

Gemäß einer Ausführungsform ist die Lageranordnung gekennzeichnet durch einen drehfest mit dem Werkzeugträger verbundenen Abdeckkörper, der die Staunut in axialer Richtung zumindest teilweise radial abdeckt. Der Abdeckkörper kann die Staunut axial auch komplett überdecken. Dieser Abdeckkörper stellt einen zusätzlichen Schutz gegen das Eindringen von Fremdkörpern in die Staunut und somit letztendlich in den (Ring)Spalt dar. Der Abdeckkörper kann auf einfache weise durch ein Blechteil (z.B. zylindrische Blechbuchse) gebildet werden und/oder durch eine Übermaßpassung auf dem Werkzeugträger sitzen. Möglich ist, dass der Abdeckkörper axial teilweise den Dichtungskörper überdeckt.

Indem der axial zur Mitte der Lageranordnung gerichtete Rand des Dichtungskörpers erfindungsgemäß angeschrägt ist, wird erreicht, dass möglicherweise eingedrungene Fremdkörper schwerkraftbedingt sehr leicht aus der Staunut herausfallen können.

Möglich ist, dass die Staunut ein rechteckförmiges, ein U-förmiges, ein V-förmiges oder ein trapezförmiges Querschnittsprofil aufweist oder dass eine zur axialen Mitte der Lageranordnung näher gelegene Nutflanke senkrecht zur Lagerachse angeordnet ist und eine zur axialen Mitte der Lageranordnung weiter entfernt gelegene Nutflanke derart unter einem Winkel zur Lagerachse angeordnet ist, dass sich die Nut von einem Nutgrund zu einer Nutöffnung hin erweitert. Letztere Ausgestaltung der Staunut begünstigt ebenfalls das schwerkraftbedingte Herausfallen von Fremdkörpern aus der Staunut.

### Kurze Beschreibung der Zeichnungen

Ausführungsbeispiele der vorliegenden Erfindung werden im Folgenden anhand der beigefügten Figuren 1 bis 3 erläutert. Dabei zeigen
- Fig. 1: eine schematische Schnittdarstellung eines landwirtschaftlichen Gerätes, umfassend eine erfindungsgemäße Lageranordnung gemäß einem ersten Ausführungsbeispiel,
- Fig. 2: einen Ausschnitt eines zweiten Ausführungsbeispiels, und
- Fig. 3: einen Ausschnitt eines dritten Ausführungsbeispiels.
- Die Fig. 4: bis 9 zeigen jeweils einen Ausschnitt entsprechend dem Ausschnitt Z aus Fig. 1 einer nicht erfindungsgemäßen Lageranordnung, jeweils mit Variationen der Dichtung.

### Ausführliche Beschreibung der Zeichnungen

Gleiche oder funktionsgleiche Elemente sind durch gleiche Bezugszeichen in den Figuren gekennzeichnet.

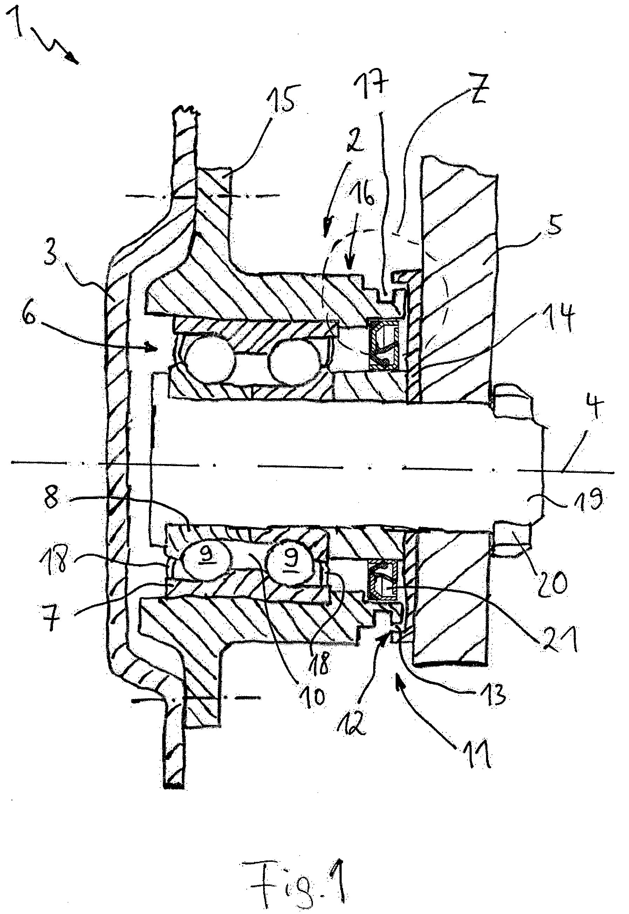

Figur 1 zeigt eine schematische Schnittdarstellung eines landwirtschaftlichen Geräts 1, umfassend eine erfindungsgemäße Lageranordnung 2 gemäß einem ersten Ausführungsbeispiel nach dem ersten Aspekt der Erfindung.

Das landwirtschaftliche Gerät 1 umfasst ein scheibenförmiges Werkzeug 3, welches mittels der Lageranordnung 2 bezüglich einer Lagerachse 4 gegenüber einem feststehendem Gestell 5 (in Form einer Gabel) drehbar gelagert ist.

Die Lageranordnung 2 umfasst ein Wälzlager 6 mit Außenring 7, Innenring 8 und Wälzkörpern 9. Die Wälzkörper 9 rollen zwischen Außenring 7 und Innenring 8 in einem Lagerraum 10 ab. Der Lagerraum 10 ist gegenüber der Umgebung einerseits axial beidseitig an dem Wälzlager 6 durch in dem Wälzlager 6 integrierte berührende Dichtungen 18 abgedichtet.

Weiterhin ist an einem axialen Ende 11 der Lageranordnung 2 eine berührungslose Dichtung 12 vorgesehen.

Die berührungslose Dichtung 12 ist durch einen Spalt 13 zwischen einem Dichtungskörper 14 und einem Werkzeugträger 15 gebildet. Dabei hintergreift der Dichtungskörper 14 eine Außenmantelfläche 16 des Werkzeugträgers 15 axial.

Erfindungsgemäß ist neben dem Dichtungskörper 14 eine Staunut 17 in dem Werkzeugträger 15 axial außermittig vorgesehen. Die Staunut 17 beginnt axial direkt neben dem Dichtungskörper 14.

Die Lageranordnung 2 sitzt auf einem Lagerbolzen 19, der mittels einer Verschraubung 20 mit dem Gestell 5 drehfest verbunden ist. Strömungstechnisch zwischen den in das Wälzlager 6 integrierten Dichtungen 18 und der berührungslosen Dichtung 12 ist eine weitere berührende Dichtung 21 vorgesehen.

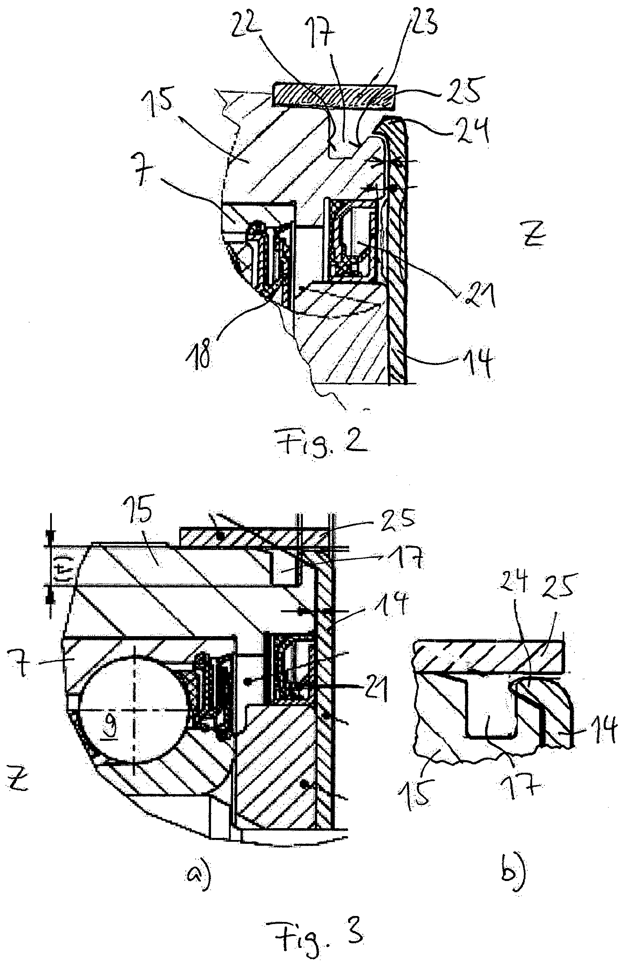

Im Ausschnitt Z ist ein axial zur Mitte der Lageranordnung gerichteter Rand des Dichtungskörpers 14 angeschrägt, was in Figur 1 nicht im Detail gezeigt ist. Mögliche Ausgestaltungen einer derartigen Anschrägung sind im Detail in den Figuren 2 und 3 dargestellt.

Die Fig. 2 und 3 zeigen jeweils einen Ausschnitt entsprechend dem Ausschnitt Z aus Fig. 1 einer erfindungsgemäßen Lageranordnung, jeweils mit Variationen der Dichtung.

Fig. 2 zeigt einen Ausschnitt eines zweiten Ausführungsbeispiels.

In diesem Ausführungsbeispiel weist die Staunut 17 zwei Flanken 22, 23 auf, wobei eine Flanke 22 senkrecht zur Lagerachse und eine Flanke 23 unter einem Winkel geneigt zur Lagerachse ist, so dass die Nutöffnung größer als der Nutgrund ist.

Ein axial zur Mitte der Lageranordnung gerichteter Rand 24 des Dichtungskörpers 14 ist angeschrägt.

Diese beiden Maßnahmen bewirken, dass in der Staunut 17 befindliche Fremdkörper schwerkraftbedingt leichter aus dieser herausfallen.

Weiterhin ist die Staunut 17 durch einen Abdeckkörper 25 radial abgedeckt.

Fig. 3 zeigt einen Ausschnitt eines dritten Ausführungsbeispiels.

Die Staunut 17 weist einen im Wesentlichen rechteckförmigen Querschnitt auf. Ein axial zur Mitte der Lageranordnung gerichteter Rand 24 des Dichtungskörpers 14 ist angeschrägt.

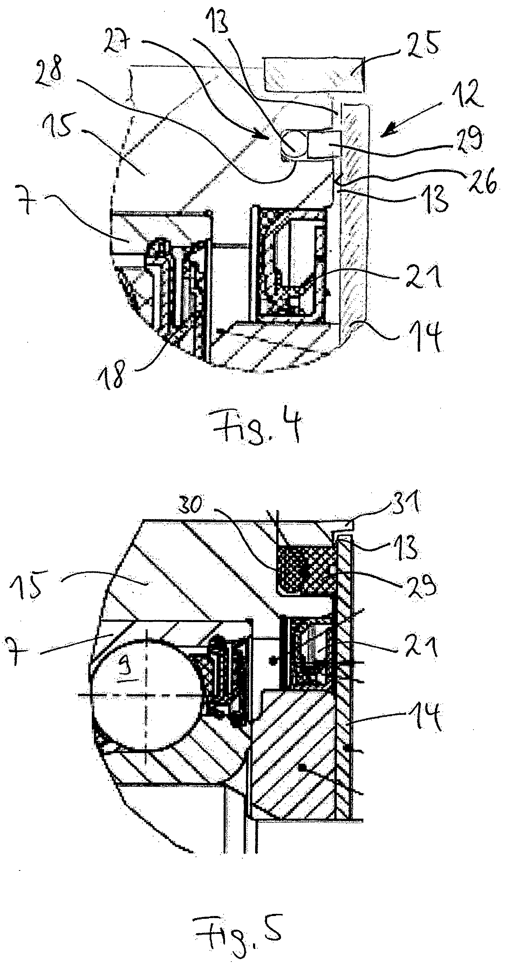

Die Fig. 4 bis 9 zeigen jeweils einen Ausschnitt entsprechend dem Ausschnitt Z aus Fig. 1 einer nicht erfindungsgemäßen Lageranordnung, jeweils mit Variationen der Dichtung.

Gemäß Fig. 4 wird die berührungslose Dichtung 12 durch einen Spalt 13 zwischen dem Dichtungskörper 14 und dem Werkzeugträger 15 gebildet, indem der Dichtungskörper 14 eine Stirnseite 26 des Werkzeugträgers 15 radial zumindest teilweise abdeckt.

In dem Spalt 13 ist eine weitere berührende Dichtung 27 vorgesehen; diese besteht aus einem sich in einer Nut 28 der Stirnseite 26 befindlichen Gleitring 29, der durch einen O-Ring 30 gegen den Dichtungskörper 14 gepresst wird. Der Spalt 13 wird radial außen durch einen Abdeckkörper 25 abgeschirmt.

Gemäß Fig. 5 wird anstelle eines Abdeckkörpers 25 der Spalt 13 durch einen einstückig mit dem Werkzeugträger 15 ausgebildeten axialen Vorsprung 31 radial nach außen abgeschirmt.

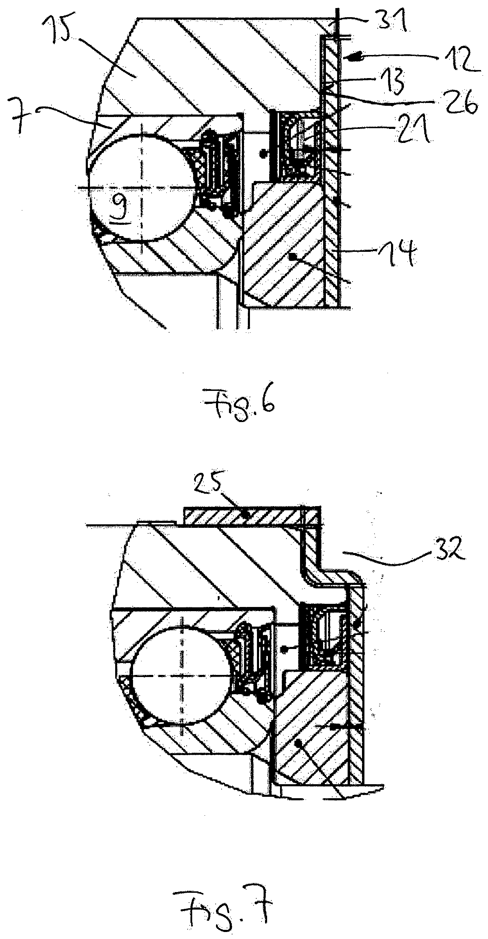

Gemäß Fig. 6 wird die berührungslose Dichtung 12 durch einen Spalt 13 zwischen dem Dichtungskörper 14 und dem Werkzeugträger 15 gebildet, indem der Dichtungskörper 14 eine Stirnseite 26 des Werkzeugträgers 15 an einem dem axialen Ende der Lageranordnung zugewandten Ende radial zumindest teilweise abdeckt und der Dichtungskörper 14 durch einen drehfest mit dem Werkzeugträger festgelegten axialen Vorsprung 31 außenumfänglich abgedeckt wird.

Gemäß Fig. 7 weist der Werkzeugträger 15 an seinem, dem axialen Ende der Lageranordnung zugewandten Ende auf einer Außenmantelfläche 26 einen Absatz 32 auf und der Dichtungskörper 14 weist eine dem Absatz 32 korrespondierende Form auf.

In diesem Fall wird der Dichtungskörper 14 außenumfänglich durch einen separaten Abdeckkörper 25 abgedeckt.

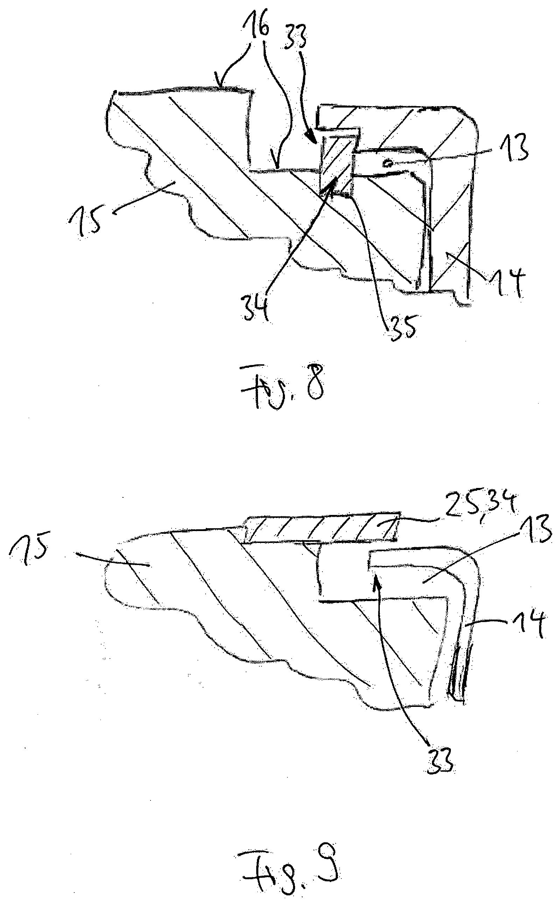

Gemäß Fig. 8 hintergreift der Dichtungskörper 14 eine Mantelfläche 16 des Werkzeugträgers 15 an einem dem axialen Ende der Lageranordnung zugewandten Ende axial zumindest teilweise und ein in Richtung einer axialen Mitte der Lageranordnung gerichtetes Ende 33 des Spaltes 13 wird durch ein Dichtelement 34 abgedichtet.

Das Dichtelement 34 sitzt in einer auf der Mantelfläche 16 eingebrachten Nut 35.

Gemäß Fig. 9 wird das Dichtelement 34 durch einen Abdeckkörper 25 gebildet, der den Dichtungskörper 14 axial überdeckt und dabei das Ende 33 des Spaltes 13 umfänglich abdeckt.

### Bezugszeichenliste

- 1: landwirtschaftliches Gerät
- 2: Lageranordnung
- 3: scheibenförmiges Werkzeug
- 4: Lagerachse
- 5: Gestell
- 6: Wälzlager
- 7: Außenring
- 8: Innenring
- 9: Wälzkörper
- 10: Lagerraum
- 11: axiales Ende
- 12: berührungslose Dichtung
- 13: Spalt
- 14: Dichtungskörper
- 15: Werkzeugträger
- 16: Außenmantelfläche
- 17: Staunut
- 18: Dichtung
- 19: Lagerbolzen
- 20: Verschraubung
- 21: berührende Dichtung
- 22: Flanke
- 23: Flanke
- 24: Rand
- 25: Abdeckkörper
- 26: Stirnseite
- 27: berührende Dichtung
- 28: Nut
- 29: Gleitring
- 30: O-Ring
- 31: axialer Vorsprung
- 32: Absatz
- 33: Ende (des Spaltes)
- 34: Dichtelement
- 35: Nut

## Patentansprüche

1. Lageranordnung (2) eines landwirtschaftlichen Geräts (1) zur drehbaren Lagerung eines scheibenförmigen Werkzeuges (3), die Lageranordnung (2) umfassend ein Wälzlager (6) mit einer Vielzahl von um eine Lagerachse (4) in einem Lagerraum (10) abwälzender Wälzkörper (9), wobei der Lagerraum (10) gegenüber der Umgebung an einem axialen Ende (11) der Lageranordnung (2) durch zumindest eine berührende Dichtung (21) und eine berührungslose Dichtung (12) abgedichtet ist, wobei die berührungslose Dichtung (12) durch einen Spalt (13) zwischen einem Dichtungskörper (14) und einem relativ zu dem Dichtungskörper (14) drehbaren Werkzeugträger (15) gebildet wird, indem der Dichtungskörper (14) eine Außenmantelfläche (16) des Werkzeugträgers (15) an einem dem axialen Ende (11) der Lageranordnung (2) zugewandten Ende axial zumindest teilweise hintergreift, **dadurch gekennzeichnet, dass** axial neben dem Dichtungskörper (14) in Richtung einer axialen Mitte der Lageranordnung (2) eine Staunut (17) in dem Werkzeugträger (15) axial außermittig vorgesehen ist, und ein axial zur Mitte der Lageranordnung (2) gerichteter Rand des Dichtungskörpers (14) angeschrägt ist.

2. Lageranordnung (2) nach Anspruch 1, **dadurch gekennzeichnet, dass** sich der Dichtungskörper (14) axial bis zu einem axialen Rand der Staunut (17) erstreckt.

3. Lageranordnung (2) nach Anspruch 1 oder 2, **gekennzeichnet durch** einen drehfest mit dem Werkzeugträger (15) verbundenen Abdeckkörper (25), der die Staunut (17) in axialer Richtung zumindest teilweise radial abdeckt.

4. Lageranordnung (2) nach einem der vorangegangen Ansprüche, **dadurch gekennzeichnet, dass** die Staunut (17) ein rechteckförmiges, ein U-förmiges, ein V-förmiges oder ein trapezförmiges Querschnittsprofil aufweist oder dass eine zur axialen Mitte der Lageranordnung (2) näher gelegene Nutflanke senkrecht zur Lagerachse (4) angeordnet ist und eine zur axialen Mitte der Lageranordnung (2) weiter entfernt gelegene Nutflanke derart unter einem Winkel zur Lagerachse (4) angeordnet ist, dass sich die Nut von einem Nutgrund zu einer Nutöffnung hin erweitert.

## Claims

1. Bearing assembly (2) for an agricultural device (1) for the rotatable mounting of a disc-shaped tool (3), the bearing assembly (2) comprising a rolling bearing (6) with a multiplicity of rolling bodies (9) rolling about a bearing axis (4) in a bearing space (10), wherein the bearing space (10) is sealed off in relation to the surroundings at an axial end (11) of the bearing assembly (2) by means of at least one contacting seal (21) and a contactless seal (12), wherein the contactless seal (12) is formed by a gap (13) between a seal body (14) and a tool carrier (15), which is rotatable relative to the seal body (14), by the seal body (14) engaging at least partially axially behind an outer circumferential surface (16) of the tool carrier (15) at an end facing the axial end (11) of the bearing assembly (2), **characterized in that**, axially next to the seal body (14) in the direction of an axial centre of the bearing assembly (2), a storage groove (17) is provided axially eccentrically in the tool carrier (15), and an edge of the seal body (14), which edge is directed axially with respect to the centre of the bearing assembly (2), is bevelled.

2. Bearing assembly (2) according to Claim 1, **characterized in that** the seal body (14) extends axially as far as an axial edge of the storage groove (17).

3. Bearing assembly (2) according to Claim 1 or 2, **characterized by** a cover body (25) which is connected non-rotatably to the tool carrier (15) and at least partially covers the storage groove (17) radially in the axial direction.

4. Bearing assembly (2) according to one of the preceding claims, **characterized in that** the storage groove (17) has a rectangular, a U-shaped, a V-shaped or a trapezoidal cross-sectional profile, and **in that** a groove flank positioned closer to the axial centre of the bearing assembly (2) is arranged perpendicular to the bearing axis (4) and a groove flank positioned further away from the axial centre of the bearing assembly (2) is arranged at an angle to the bearing axis (4) such that the groove expands from a groove base towards a groove opening.

## Revendications

1. Agencement de palier (2) d'un engin agricole (1) pour le support rotatif sur palier d'un outil (3) en forme de disque, l'agencement de palier (2) comprenant un palier à roulement (6) avec une pluralité de corps de roulement (9) roulant autour d'un axe de palier (4) dans un espace de palier (10), l'espace de palier (10) étant étanchéifié par rapport à l'environnement au niveau d'une extrémité axiale (11) de l'agencement de palier (2) par au moins un joint d'étanchéité à contact (21) et un joint d'étanchéité sans contact (12), le joint d'étanchéité sans contact (12) étant formé par une fente (13) entre un corps d'étanchéité (14) et un porte-outil (15) pouvant tourner par rapport au corps d'étanchéité (14), par le fait que le corps d'étanchéité (14) vient en prise par l'arrière axialement au moins en partie avec une surface d'enveloppe extérieure (16) du porte-outil (15) au niveau d'une extrémité tournée vers l'extrémité axiale (11) de l'agencement de palier (2), **caractérisé en ce qu'**une rainure de retenue (17) est prévue axialement de manière décentrée dans le porte-outil (15) axialement à côté du corps d'étanchéité (14) dans la direction d'un centre axial de l'agencement de palier (2), et un bord du corps d'étanchéité (14) orienté axialement par rapport au centre de l'agencement de palier (2) est chanfreiné.

2. Agencement de palier (2) selon la revendication 1, **caractérisé en ce que** le corps d'étanchéité (14) s'étend axialement jusqu'à un bord axial de la rainure de retenue (17).

3. Agencement de palier (2) selon la revendication 1 ou 2, **caractérisé par** un corps de recouvrement (25) connecté de manière solidaire en rotation au porte-outil (15), lequel recouvre au moins en partie radialement la rainure de retenue (17) dans la direction axiale.

4. Agencement de palier (2) selon l'une quelconque des revendications précédentes, **caractérisé en ce que** la rainure de retenue (17) présente un profil en section transversale rectangulaire, en forme de U, en forme de V ou de forme trapézoïdale, ou **en ce qu'**un flanc de rainure placé plus près du centre axial de l'agencement de palier (2) est disposé perpendiculairement à l'axe de palier (4) et un flanc de rainure placé à plus grande distance du centre axial de l'agencement de palier (2) est disposé suivant un certain angle par rapport à l'axe de palier (4) de telle sorte que la rainure s'élargisse depuis un fond de rainure vers une ouverture de rainure.
